# EUROPÄISCHE PATENTSCHRIFT

(11) **EP 0 764 867 B1**
(45) Veröffentlichungstag und Bekanntmachung des Hinweises auf die Patenterteilung: **13.12.2000**
(21) Anmeldenummer: 96115252.7
(22) Anmeldetag: 23.09.1996
(51) Int. Cl.: G02B 26/00, H04N 1/028, G03B 27/54

(54) **CCD-Zeilenscanner zum optisch-elektrischen Abtasten eines Objektes**
CCD line scanner for opto-electronically scanning of an object
Dispositif de balayage en ligne CCD pour le balayage opto-électronique d'un objet

(30) Priorität: 21.09.1995 DE 19535098
(43) Veröffentlichungstag der Anmeldung: 26.03.1997
(73) Patentinhaber: Baumer Optronic GmbH, 01454 Radeberg/bei Dresden (DE)
(72) Erfinder: Ihlefeld,Joachim,Dr., 01097 Dresden (DE)
(74) Vertreter: Ostertag, Ulrich

(56) Entgegenhaltungen:
- GB-A- 1 586 572
- US-A- 4 220 978
- US-A- 4 422 100

## Beschreibung

Die Erfindung betrifft einen CCD-Zeilenscanner gemäß dem Oberbegriff des Anspruchs 1.

Ein derartiger CCD-Zeilenscanner ist aus der US 4 422 100 A bekannt. Dort kommen eine stabförmige Lampe als Beleuchtungssystem sowie ein länglicher Reflektor zum Einsatz. Die Lampe liegt längs einer der Brenngeraden des elliptischen Reflektors und eine zu kopierende Objekt-Zeile längs der anderen der beiden Brenngeraden. Licht, das von der so beleuchteten Objekt-Zeile zurückgestreut wird, kann durch einen länglichen Spalt hindurchtreten, der seitlich vom Scheitelbereich des Reflektors versetzt angeordnet ist. Hinter dem Reflektor wird das Licht von einem Spiegel um 90° umgelenkt und tritt durch eine Linse. Eine Strahlteileranordnung sorgt dafür, daß Lichtanteile auf zwei CCD-Zeilensensoren aufgeteilt werden.

Durch die in der US 4 422 100 A offenbarte Anordnung der stabförmigen Lampe und des Spalts kann nicht vollständig vermieden werden, daß direkt von der Lampe emittiertes Licht in den Abbildungsstrahlengang für die CCD-Zeilensensoren gelangt. Durch die versetzte Anordnung des Spaltes zum Scheitelbereich des Reflektors ergibt sich, daß der Abbildungsstrahlengang zur optischen Achse des Beleuchtungslichtes geneigt ist, was zu Schatteneffekten führt.

Aus der US 4 220 978 A ist ein Zeilenscanner zum optisch-elektrischen Abtasten einer Zeile eines Objekts bekannt. Die Objekt-Zeile wird dabei von zwei Lampen beleuchtet, die konkave Reflektoren aufweisen. Letztere dienen zur Verbesserung der Lampeneffizienz sowie zur Unterstützung der homogenen Ausleuchtung der Objekt-Zeile. Die eigentliche Übertragung des Lichts der Lampen auf die Objekt-Zeile wird durch einen Lichtwellenleiter bewerkstelligt. Dieser weist schmale rechteckige Eintritts- und Austrittsöffnungen sowie diese verbindende, sich trapezförmig erweiternde reflektierende Flächen auf. Die Eintrittsöffnung des Lichtwellenleiters ist so lang, daß sie nicht nur die Verbindungsstrecke zwischen den Lampen einnimmt, sondern zusätzlich ein Stück weit seitlich über die Lampen hinausragt. Durch den Wellenleiter hindurch verläuft auch der Abbildungsstrahlengang der durch die Lampen beleuchteten Objekt-Zeile. Zur Abbildung dient eine Linse. Zur weiteren optisch-elektrischen Verarbeitung des Abbildungslichts offenbart die US 4 220 978 A einen fotoelektrischen Sensor.

Durch den Einsatz der Reflektoren wird bei der Anordnung der US 4 220 978 A zwar eine direkte Beaufschlagung des Sensors mit von den Lampen remittiertem Licht vermieden, hierzu wird jedoch eine sehr komplexe Anordnung mit hohem Justageaufwand beschrieben.

Für eine opto-elektrische Oberflächeninspektion ist die Beleuchtungstechnik ein entscheidendes Systemelement, wenn glänzende Oberflächen zu inspizieren sind und wenn kontrastreiche Bildaufnahmen, beispielsweise von Belegen, erhalten werden sollen, die automatisch archiviert oder gelesen werden sollen.

Der Erfindung liegt die Aufgabe zugrunde, eine kompakte Konstruktion eines CCD-Zeilenscanners der eingangs genannten Art zu schaffen, der einen hohen Wirkungsgrad hinsichtlich der Beleuchtung, eine geringe Verlustleistung und ein geringes Shading aufweisen soll.

Diese Aufgabe wird erfindungsgemäß gelöst durch einen CCD-Zeilenscanner mit den im Anspruch 1 bzw. im Anspruch 2 angegebenen Merkmalen.

Der erfindungsgemäße CCD-Zeilenscanner besitzt den Vorteil, daß er eine kompakte Bauweise, einen hohen Wirkungsgrad hinsichtlich der Beleuchtung, eine geringe Verlustleistung und ein geringes Shading aufweist.

Vorteilhafte Weiterbildungen der Erfindung sind in den Unteransprüchen angegeben.

Eine Ausgestaltung des CCD-Zeilenscanners gemäß Anspruch 3 gewährleistet eine kleine Bauweise des CCD-Zeilenscanners.

Ein Strahl- und/oder Farbteiler gemäß Anspruch 4 ermöglicht eine Bildaufnahme in zwei Farbkanälen.

Eine Blende gemäß Anspruch 5 vermeidet, daß direkt abgestrahltes Licht durch den Durchbruch gelangt.

Bei einer Ausgestaltung des CCD-Zeilenscanners gemäß den Ansprüchen 6 oder 8 wird das von dem oder den CCD-Zeilen- oder Matrixsensor(en) aufgenommene Bild im wesentlichen aus remittierenden und nicht aus reflektierenden Komponenten des einfallenden Lichtes gebildet, das heißt der Abbildungsstrahlengang wird hauptsächlich aus remittierten Strahlen, herrührend vom abzutastenden Objekt, gebildet.

Bei einer Ausgestaltung des CCD-Zeilenscanners gemäß Anspruch 7 sind Reflexionen, wie sie beispielsweise von schnell bewegten ("flatternden") und glänzenden Belegen, z.B. Schecks oder Scheckkarten erzeugt werden, ausgeschlossen.

Kurzbeschreibung der Zeichnung, in der zeigen:
- Figur 1: einen Längsschnitt durch eine Beleuchtungsanordnung mit einem in einer Richtung elliptisch-konkav gekrümmten Spiegel,
- Figur 2: eine Draufsicht auf die Beleuchtungsanordnung der Figur 1 längs des Schnittes A-A,
- Figur 3: eine technische Ausführung eines Spiegels, der im Querschnitt elliptisch gekrümmt ist,
- Figur 4: eine Draufsicht von unten auf Figur 3 und
- Figur 5: eine Ansicht der Beleuchtungsanordnung mit Spiegel gemäß der Figur 3.

### Wege zur Ausführung der Erfindung:

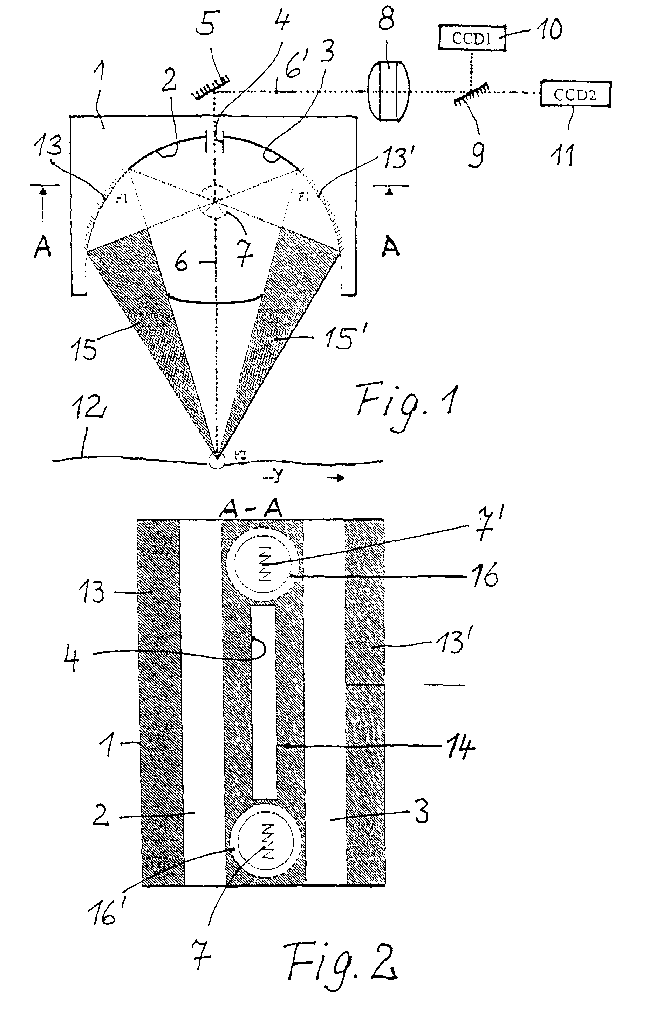

Figur 1 zeigt einen Längsschnitt durch einen Körper, der einen konkaven Hohlraum aufweist, der in einer Richtung elliptisch gekrümmt ist und dessen Oberfläche zur Bildung eines Spiegels 1 verspiegelt ist; in der Figur 1 sind die linke und die rechte Spiegelhälfte des Spiegels 1 mit den Bezugsziffern 2 und 3 bezeichnet. Auf der Brenn-Geraden F1 bzw. in Projektion gesehen in dem einen Brennpunkt F1 des Spiegels 1 innerhalb desselben sind zwei Lampen 7, 7' angeordnet; in der zweiten Brenn-Geraden F2 bzw. in Projektion gesehen im zweiten Brennpunkt F2 befindet sich in der Ebene das abzutastende Objekt 12, welches in y-Richtung unter dem Spiegel 1 bewegt wird. Vorzugsweise sind die Lampen 7, 7' in den äußern Bereichen des Spiegels 1 angeordnet sind, was aus Figur 2 hervorgeht.

Der Spiegel 1 weist im Bereich seines Scheitels und in Projektion gesehen zwischen den Lampen 7, 7' einen spaltförmigen Durchbruch 4 zum Ausblenden des vom Objekt 12 herrührenden Abbildungsstrahlengangs 6 nach außerhalb des Spiegels 1 auf. Oberhalb des Durchbruchs 4 ist längs desselben ein Ablenkspiegel 5 angeordnet, der um 45 Grad geneigt ist zum Ablenken des Abbildungsstrahlengangs 6, wobei sich im äußeren, umgelenkten Abbildungsstrahlengang 6' ein Objektiv 8 befindet, in dessen Bildebene ein Zeilensensor 11 angeordnet ist. Vor dem Zeilensensor 11 kann ein Strahl- oder Farbteiler 9 angeordnet sein, der den Abbildungsstrahlengang 6' aufteilt und auf weitere CCD-Zeilensensoren 10 leitet.

Um direkt abgestrahltes Licht zu vermeiden, kann gemäß Figur 2 vor den Lampen 7, 7' je eine Blende 16, 16' angeordnet sein. Des weiteren kann der Spiegel 1 im Bereich des Scheitels und um den Durchbruch sowie die Lampen 7, 7' einen länglichen geschwärzten Bereich 14 aufweisen. Ebenso kann der Spiegel 1 unterhalb der Spiegelhälften 2 und 3 längliche, parallel zum Durchbruch 4 verlaufende geschwärzte Bereiche 13, 13' aufweisen; oder diese Bereiche 13, 13' können aufgerauht oder strukturiert nichtspiegelnd sein, wie es aus Figur 2 hervorgeht.

Dadurch wird erreicht, daß die Bereiche 13, 13' des Spiegels 1 ausgeblendet sind und die Raumsektoren 15, 15' keine Strahlung zum Brennpunkt F2 bzw. zur Brenn-Geraden F2 liefern, so daß die Charakteristik des einfallenden Lichts dergestalt gewählt ist, daß der Einfallswinkel des einfallenden Lichtes zwischen etwa 20 und 50 Grad beträgt. Dadurch besteht der Abbildungsstrahlengang 6, 6' im wesent-lichen aus remittierenden Komponenten des einfallenden Lichtes der Lampen 7, 7'. Die Beleuchtungsmaxima liegen am Rand der Bildfelder. Damit wird eine in guter Näherung zum Shading des Objektivs inverse Verteilung der Beleuchtungsstärke erzeugt, so daß insgesamt die Empfindlichkeit über der CCD-Zeile konstant bleibt.

Der CCD-Zeilenscanner bzw. Spiegel 1 kann in besonders kleiner Bauweise gemäß der Figuren 1, 3 und 4 in einer Achsrichtung gerade-länglich und in der dazu senkrechten Querschnittsebene als Teilellipsoid oder annähernd als Teilellipsoid ausgeführt sein, wobei dann die zweite Brenn-Gerade F2, auf der sich in der Ebene das Objekt 12 befindet, außerhalb des Spiegels bzw. Reflektors verläuft.

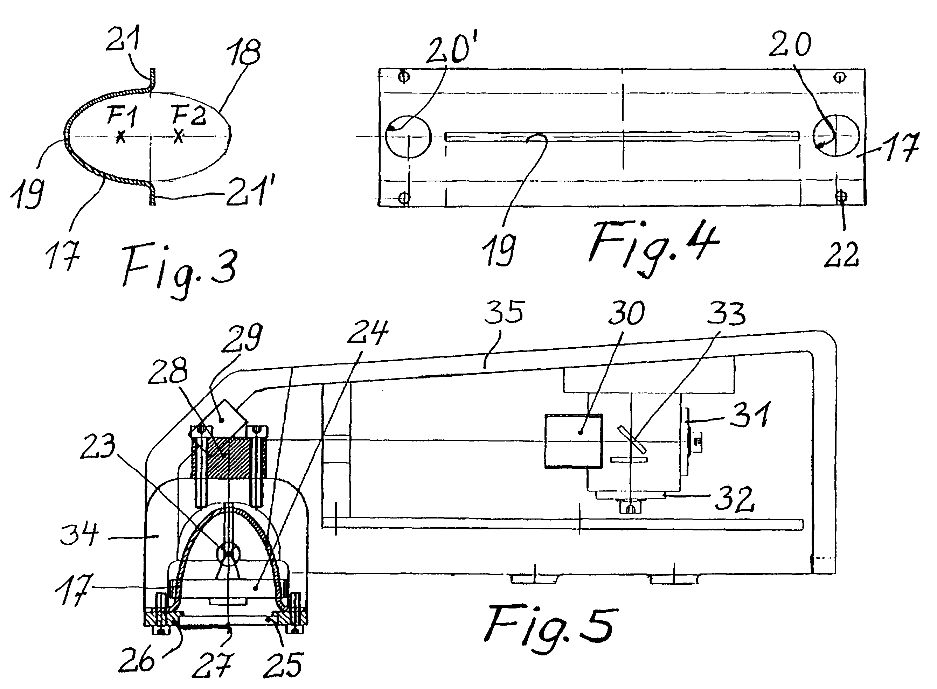

Die Figuren 3 bis 5 zeigen eine technische Ausführung der erfindungsgemäßen Beleuchtungseinrichtung. Ein CCD-Zeilenscanner besteht aus einem in einer Querschnittsebene elliptisch gekrümmten, in senkrechter Richtung hierzu gerade-länglichen Reflektor 17 aus einem Blech- oder Kunststoffteil, dessen innere Fläche als Spiegel-Einhüllende die Hälfte einer Ellipse 18 mit der innen liegenden Brennpunkt-Geraden F1 und der außen liegenden Brennpunkt-Geraden F2 ist. Am Scheitel besitzt der Reflektor 17 gemäß Figur 4 einen Längsschlitz 19. Seitlich der Enden des Längsschlitzes 19 befinden sich innerhalb des Reflektors für die Lampen-halterung zwei Löcher 20, 20'. Der Reflektor 17 besitzt längs seitlich verlaufende, um cirka 90 Grad umgekantete Schenkel 21, 21', in denen Bohrungen 22 zur Befestigung des Reflektors 17 angeordnet sind.

Figur 5 zeigt die Anordnung des Reflektors 17 innerhalb einer kompletten Beleuchtungseinrichtung, bestehend aus einem Halteelement 34, welches bügelförmig, auch aus zwei Bügeln, gestaltet sein kann und in welchem der Reflektor 17 montiert ist. Auf der inneren Brennpunktsgeraden F1 des Reflektors 17 und somit innerhalb desselben befinden sich zwei Lampen 23, welche je an einer Lampenfassung 28 aufgehängt sind, die beide auf dem Halteelement 34 oder Halteelementen befestigt sind. Die Lampenfassungen 28 wie auch das oder die Halteelemente 34 sind so gestaltet, daß der Abbildungsstrahlengang durch den Längsschlitz 19 auf einen oberhalb des Reflektors 17 zwischen den Lampenfassungen 28 befindlichen Längsspiegel 29 fallen kann, der den Abbildungsstrahlengang auf ein Objektiv 30 umlenkt. Von da fällt das umgelenkte Strahlenbündel auf eine CCD-Zeile 31 oder CCD-Matrix. Innerhalb des Abbildungsstrahlenganges nach dem Ob jektiv 30 kann ein halbdurchlässiger Umlenkspiegel 33 angeordnet sein, der einen Teil des Strahlengangs über ein Filter auf eine weitere CCD-Zeile 32 ablenkt.

Innerhalb des Reflektors 17 unterhalb oder seitlich der Lampen 23 befindet sich je eine Lampenkulisse 24, die eine Abschattung desjenigen Lichtes bewirkt, welches in Projektion senkrecht nach unten von den Lampen 23 zum Objekt ausgeht. Diese Abschattung kann durch einen Vorsprung oder eine Nase gebildet sein, welche an den Kulissen 24 vorspringend angeordnet ist, wobei die Nasen an den Lampen-kulissen 24 aufeinander zu gerichtet sind und in der senkrechten Projektion gerade den direkten Strahlengang der Lampen 23 nach unten auf das Objekt abschatten, um dadurch direkt abgestrahltes Licht zu vermeiden. Unterhalb des Reflektors 17 ist ein Deckglasrahmen 26 angeordnet, der ein Deckglas 25 zum Abschluß des Reflektors 17 haltert. Zur Shadingkorrektur kann auf oder unterhalb des Deckglases 25 eine Blende 27 angeordnet sein. Der Deckglasrahmen 26 ist zusammen mit dem Reflektor 17 mittels Schrauben an dem oder den Halteelementen 34 angeschraubt. Das oder die Halteelemente 34 sind an einem Traggerüst 35 gehaltert, welches auch die elektrischen und optischen Teile umschließt.

### Gewerbliche Anwendbarkeit:

Der erfindungsgemäße CCD-Zeilenscanner zum optisch-elektrischen Abtasten eines Objektes ist insbesondere dazu geeignet, zum automatischen Erfassen von Belegen oder Scheckkarten eingesetzt zu werden, weil damit Reflexionen, wie sie beispielsweise von schnell bewegten ("flatternden'') und glänzenden Belegen, zum Beispiel Schecks oder Scheckkarten, erzeugt werden, ausgeschlossen sind.

## Patentansprüche

1. CCD-Zeilenscanner zum optisch-elektrischen Abtasten eines Objektes (12), insbesondere zum automatischen Erfassen von Belegen oder Scheckkarten, bestehend aus einer Beleuchtungseinrichtung (34, 35) in Form eines Spiegels oder Reflektors (1, 2, 3, 17) mit einem Beleuchtungssystem (7, 7', 23), einem Objektiv (8, 30) und wenigstens einem danach angeordneten CCD-Zeilensensor (10, 11, 31, 32), wobei der Spiegel bzw. Reflektor (1, 2, 3, 17) in einer Querschnittsebene elliptisch gekrümmt und senkrecht zu der Querschnittsebene gerade-länglich ist, eine Brenngerade (F 2) des Spiegels bzw. Reflektors (1, 2, 3, 17) beim Betrieb des CCD-Zeilenscanners im wesentlichen auf der Oberfläche des abzutastenden Objekts (12) liegt und der Spiegel (1, 2, 3, 17) im Bereich seines Scheitels einen spaltförmigen Durchbruch (4, 19) zum Ausblenden des Abbildungsstrahlengangs (6) nach außerhalb des Spiegels (1, 2, 3, 17) aufweist, wobei im äußeren Abbildungsstrahlengang (6') nach dem Durchbruch (4, 19) sich das Objektiv (8, 30) befindet, in dessen Bildebene der Zeilensensor (10, 11, 31, 32) angeordnet ist,
dadurch gekennzeichnet, daß
das Beleuchtungssystem (7, 7', 23) durch zwei Lampen (7, 7') gebildet wird, die in der anderen Brenngeraden (F 1) des Spiegels bzw. Reflektors (1, 2, 3, 17) angeordnet sind, und daß sich der Durchbruch in einer Projektion in Richtung einer senkrecht auf den Brenngeraden (F 1, F 2) stehenden und diese verbindenden Geraden gesehen zwischen den Lampen (7, 7') befindet.

2. CCD-Zeilenscanner nach Anspruch 1, dadurch gekennzeichnet, daß die Lampen (7, 7', 23) auf der spiegelseitigen Brenngeraden (F 1) des Spiegels oder Reflektors (1, 2, 3, 17) liegen, wobei die Lampen (7, 7', 23) in den äußeren Bereichen des Spiegels (1, 2, 3, 17) angeordnet sind und beim Betrieb die gegenüberliegende Brenngerade (F 2) des Spiegels oder Reflektors (1, 2, 3, 17) im wesentlichen auf der Oberfläche des abzutastenden Objekts (12) liegt.

3. CCD-Zeilenscanner nach Anspruch 1 oder 2, dadurch gekennzeichnet, daß oberhalb des Durchbruchs (4, 19) längs desselben ein Ablenkspiegel (5, 29) angeordnet ist, der zum Ablenken des Abbildungsstrahlengangs (6) um 45° geneigt ist.

4. CCD-Zeilenscanner nach Anspruch 1 oder 2, dadurch gekennzeichnet, daß nach dem Objektiv (8, 30) und vor dem CCD-Zeilensensor (11, 31, 32) ein Strahl- oder Farbteiler (9, 33) angeordnet ist, der den Teilstrahl auf weitere CCD-Zeilensensoren (10, 32) leitet.

5. CCD-Zeilenscanner nach Anspruch 1 oder 2, dadurch gekennzeichnet, daß vor den Lampen (7, 7') eine Blende (16, 16', 27) angeordnet ist.

6. CCD-Zeilenscanner nach Anspruch 1, dadurch gekennzeichnet, daß im Bereich des Scheitels des Spiegels oder Reflektors (1, 2, 3, 17) auf beiden Seiten des Durchbruchs (4, 19) und/oder im Bereich der Lampen (7, 7', 23) derselbe geschwärzt ist, so daß der Abbildungsstrahlengang (6, 6') im wesentlichen aus remittierenden Komponeten des einfallenden Lichtes der Lampen (7, 7', 23) besteht.

7. CCD-Zeilenscanner nach Anspruch 1, dadurch gekennzeichnet, daß der Winkel des einfallenden Lichtes zwischen etwa 20° und 50° beträgt.

8. CCD-Zeilenscanner nach Anspruch 1, dadurch gekennzeichnet, daß die Spiegeloberfläche des Spiegels (1, 2, 3) bereichsweise nichtspiegelnd, beispielsweise aufgerauht oder geschwärzt ist, so daß der Abbildungsstrahlengang (6, 6') im wesentlichen aus remittierenden Komponenten des einfallenden Lichtes der Lampen (7, 7', 23) besteht.

9. CCD-Zeilenscanner nach Anspruch 1, dadurch gekennzeichnet, daß statt des Zeilensensors (10, 11, 31, 32) ein Matrixsensor Verwendung findet.

## Claims

1. CCD line scanner for the optoelectrical scanning of an object (12), in particular for the automatic recording of documents or cheque cards, comprising an illumination device (34, 35) in the form of a mirror or reflector (1, 2, 3, 17) with an illumination system (7, 7', 23), an objective (8, 30) and at least one CCD line sensor (10, 11, 31, 32) disposed downstream, the mirror or reflector (1, 2, 3, 17) being elliptically curved in one cross-sectional plane and being linearly elongated perpendicularly to the cross-sectional plane, one focal line (F2) of the mirror or reflector (1, 2, 3, 17) being situated during the operation of the CCD line scanner substantially on the surface of the object (12) to be scanned and the mirror (1, 2, 3, 17) having a slit-shaped perforation (4, 19) for blocking out the imaging beam path (6) from outside the mirror (1, 2, 3, 17) in the region of its vertex, the objective (8, 30), in whose image plane the line sensor (10, 11, 31, 32) is disposed being situated in the outer imaging beam path (6') downstream of the perforation (4, 19), characterized in that the illumination system (7, 7', 23) is formed by two lamps (7, 7') that are disposed in the other focal line (F1) of the mirror or reflector (1, 2, 3, 17), and in that the perforation is situated between the lamps (7, 7') viewed in a projection in the direction of a straight line located perpendicularly to the focal lines (F1, F2) and connecting the latter.

2. CCD line scanner according to Claim 1, characterized in that the lamps (7, 7', 23) are situated on the mirror-side focal lines (F1) of the mirror or reflector (1, 2, 3, 17), the lamps (7, 7', 23) being disposed in the outer regions of the mirror (1, 2, 3, 17) and, during operation, the oppositely situated focal line (F2) of the mirror or reflector (1, 2, 3, 17) being situated substantially on the surface of the object (12) to be scanned.

3. CCD line scanner according to Claim 1 or 2, characterized in that there is disposed above the perforation (4, 19) along the latter a deflection mirror (5, 29) which is tilted through 45° for deflecting the imaging beam path (6).

4. CCD line scanner according to Claim 1 or 2, characterized in that, beyond the objective (8, 30) and in front of the CCD line sensor (11, 31, 32) there is disposed a beam or colour splitter (9, 33) which conveys the partial beam onto the further CCD line sensors (10, 32).

5. CCD line scanner according to Claim 1 or 2, characterized in that a diaphragm (16, 16', 27) is disposed in front of the lamps (7, 7').

6. CCD line scanner according to Claim 1, characterized in that the mirror or reflector (1, 2, 3, 17) is blackened in the region of its vertex on both sides of the perforation (4, 19) and/or in the region of the lamps (7, 7', 23) so that the imaging beam path (6, 6') substantially comprises remitting components of the incident light of the lamps (7, 7', 23).

7. CCD line scanner according to Claim 1, characterized in that the angle of the incident light is between about 20° and 50°.

8. CCD line scanner according to Claim 1, characterized in that the mirror surface of the mirror (1, 2, 3) is in some regions non-reflecting, for example is roughened or blackened, so that the imaging beam path (6, 6') substantially comprises remitting components of the incident light of the lamps (7, 7', 23).

9. CCD line scanner according to Claim 1, characterized in that, instead of the line sensor (10, 11, 31, 32), a matrix sensor is used.

## Revendications

1. Dispositif de balayage de lignes CCD pour le balayage optoélectronique d'un objet (12), notamment pour l'enregistrement automatique de pièces comptables ou de cartes accréditives, constitué d'un appareil d'éclairage (34, 35) sous la forme d'un miroir ou réflecteur (1, 2, 3, 17) équipé d'un système d'éclairage (7, 7', 23), d'un objectif (8, 30) et d'au moins un capteur de lignes CCD (10, 11, 31, 32) disposé à la suite, le miroir ou réflecteur (1, 2, 3, 17) étant à courbure elliptique dans un plan de section et de forme rectiligne oblongue perpendiculairement au plan de section, une droite focale (F2) du miroir ou réflecteur (1, 2, 3, 17) se trouvant, lorsque le dispositif de balayage de lignes CCD est en service, essentiellement sur la surface de l'objet (12) à balayer, et le miroir (1, 2, 3, 17) présentant, dans la région de son sommet, un ajour (4, 19) en forme de fente pour diaphragmer le trajet (6) des rayons de projection vers l'extérieur du miroir (1, 2, 3, 17), l'objectif (8, 30) se trouvant après l'ajour (4, 19) dans le trajet extérieur (6') des rayons de projection, le capteur de lignes (10, 11, 31, 32) étant disposé dans le plan d'image de cet objectif,
**caractérisé** en ce que le système d'éclairage (7, 7', 23) est formé par deux lampes (7, 7'), qui sont disposées sur l'autre droite focale (F1) du miroir ou réflecteur (1, 2, 3, 17), et en ce que l'ajour se trouve, considéré dans une projection en direction d'une droite perpendiculaire aux droites focales (F1, F2) et reliant ces dernières, entre les lampes (7, 7').

2. Dispositif de balayage de lignes CCD selon la revendication 1, **caractérisé** en ce que les lampes (7, 7', 23) se trouvent sur la droite focale (F1) côté miroir du miroir ou réflecteur (1, 2, 3, 17), les lampes (7, 7', 23) étant disposées dans les régions extérieures du miroir (1, 2, 3, 17) et, en service, la droite focale opposée (F2) du miroir ou réflecteur (1, 2, 3, 17) se trouvant essentiellement sur la surface de l'objet (12) à balayer.

3. Dispositif de balayage de lignes CCD selon la revendication 1 ou 2, **caractérisé** en ce qu'un miroir déflecteur (5, 29) est disposé au-dessus de l'ajour (4, 19) longitudinalement à ce dernier, miroir qui est incliné à 45° afin de dévier le trajet (6) des rayons de projection.

4. Dispositif de balayage de lignes CCD selon la revendication 1 ou 2, **caractérisé** en ce qu'un diviseur de faisceau ou chromatique (9, 33) est disposé après l'objectif (8, 30) et avant le capteur de lignes CCD (11, 31, 32), diviseur qui dirige le faisceau partiel sur d'autres capteurs de lignes CCD (10, 32).

5. Dispositif de balayage de lignes CCD selon la revendication 1 ou 2, **caractérisé** en ce qu'un diaphragme (16, 16', 27) est disposé devant les lampes (7, 7').

6. Dispositif de balayage de lignes CCD selon la revendication 1, **caractérisé** en ce que, dans la région du sommet du miroir ou réflecteur (1, 2, 3, 17) de part et d'autre de l'ajour (4, 19) et/ou dans la région des lampes (7, 7', 23), ce miroir et/ou ces lampes sont noircies, de sorte que le trajet (6, 6') des rayons de projection est constitué pour l'essentiel de composants réémetteurs de la lumière incidente des lampes (7, 7', 23).

7. Dispositif de balayage de lignes CCD selon la revendication 1, **caractérisé** en ce que l'angle de la lumière incidente est compris entre environ 20° et 50°.

8. Dispositif de balayage de lignes CCD selon la revendication 1, **caractérisé** en ce que la surface du miroir (1, 2, 3) est sectoriellement non réfléchissante, par exemple rendue rugueuse ou noircie, de sorte que le trajet (6, 6') des rayons de projection est constitué pour l'essentiel de composants réémetteurs de la lumière incidente des lampes (7, 7', 23).

9. Dispositif de balayage de lignes CCD selon la revendication 1, **caractérisé** en ce qu'on utilise, au lieu du capteur de lignes CCD (10, 11, 31, 32), un capteur matriciel.
